# EUROPÄISCHE PATENTSCHRIFT

(11) **EP 2 837 492 B1**
(45) Veröffentlichungstag und Bekanntmachung des Hinweises auf die Patenterteilung: **02.05.2018**
(21) Anmeldenummer: 14002712.9
(22) Anmeldetag: 01.08.2014
(51) Int. Cl.: B29C 65/06, B29C 65/78

(54) **Vibrationsschweißanlage mit Hub-, Schiebe- und Kipptisch sowie Steuerverfahren hierfür**
Vibration welding installation with lifting, sliding and tilting table and control method for the same
Installation de soudage par vibration dotée d'une table élévatrice, coulissante et basculante et procédé de commande associé

(30) Priorität: 14.08.2013 DE 202013007317 U
(43) Veröffentlichungstag der Anmeldung: 18.02.2015
(73) Patentinhaber: Branson Ultraschall Niederlassung der Emerson Technologies GmbH & Co. oHG, 63128 Dietzenbach (DE)
(72) Erfinder: Lotz, Wilfried, 63543 Neuberg (DE)
(74) Vertreter: Heyer, Volker

(56) Entgegenhaltungen:
- DE-U1-202005 007 282
- US-A1- 2009 199 951

## Beschreibung

Die vorliegende Erfindung betrifft eine Vibrationsschweißanlage mit einem schwingbeweglich gelagerten Werkzeugträger für ein Oberwerkzeug sowie einem Hubtisch für die Aufnahme eines Unterwerkzeugs.

Vibrationsschweißanlagen sind allgemein bekannt und werden beispielsweise für das Schweißen von Kunststoffteilen oder Kunststoffverbundteilen in der Automobilindustrie verwendet. Insbesondere werden Vibrationsschweißanlagen dazu verwendet, Kunststoffteile wie Außenverkleidungsteile, Motorverkleidungsteile, Innenraumverkleidungsteile und ähnliches für die Automobilindustrie zusammenzufügen bzw. zusammenzuschweißen. Entsprechende Vibrationsschweißanlagen verfügen über einen schwingbeweglich gelagerten Werkzeugträger für ein Oberwerkzeug und einen Hubtisch, auf dem ein Unterwerkzeug angeordnet ist. Zum Vibrationsschweißen wird im Unterwerkzeug ein erstes Fügeteil und im Oberwerkzeug ein zweites korrespondierendes Fügeteil angeordnet. Um diese Fügeteile zu schweißen ist es erforderlich, dass die Innenkontur des Oberwerkzeugs und des Unterwerkzeugs auf die Außenkontur des jeweiligen zu schweißenden bzw. zu fügenden Fügeteils abgestimmt ist.

Das Oberwerkzeug ist mittels eines Werkzeugträgers schwingbeweglich an einem Maschinenrahmen der Vibrationsschweißanlage angeordnet. Die gewünschte Linearschwingung wird durch einen Elektromagneten erzeugt. Das Unterwerkzeug ist auf einem Hubtisch angeordnet, der innerhalb des Maschinenrahmens der Vibrationsschweißanlage längs einer Vertikalachse hubbeweglich gelagert ist. Eine Verstellung des Hubtischs entlang der Vertikalachse erfolgt mittels Ansteuern eines entsprechenden Vertikalantriebs.

Für einen Schweißvorgang wird der Hubtisch mit dem Unterwerkzeug und dem ersten Fügeteil in Richtung des Oberwerkzeugs mit dem korrespondierenden zweiten Fügeteil nach oben entlang der Vertikalachse verfahren, bis die Fügeteile in ihren Fügebereichen aneinander anliegen. In dieser Arbeitsposition wird das Oberwerkzeug mittels des Elektromagneten in Vibrationsschwingung versetzt. Gleichzeitig werden die Fügeteile durch eine entsprechende Drucksteuerung gegeneinander gepresst. Durch die entstehende Grenzflächenreibung an den Fügebereichen erfolgt eine Erwärmung der Fügebereiche bis über den Schmelzpunkt der Fügeteile hinaus. Es entsteht in den Fügebereichen ein Schmelzfilm, der nach späterem Erkalten die entsprechende Schweißwulst ergibt. Nach ausreichender Schmelzfilmbildung wird die Vibrationsschwingung abgeschaltet. Der Fügedruck wird bis zur Erkaltung des Schmelzfilms aufrechterhalten.

Weist mindestens eines der beiden miteinander zu verschweißenden Fügeteile komplizierte Vorsprünge und Hinterschnitte auf, insbesondere in den miteinander zu verbindenden bzw. zu verschweißenden Bereichen, so können das jeweilige erste und zweite Fügeteil mittels der oben beschriebenen bekannten Vibrationsschweißanlage nicht immer in Anlage miteinander gebracht werden. Derartige Vorsprünge und Hinterschnitte werden daher auch als Störkonturen bezeichnet.

Zur Lösung dieses Problems wurde beispielsweise in DE 20 2005 007 282 U1 eine Vibrationsschweißanlage offenbart, mit der ein auf dem Hubtisch angeordnetes Unterwerkzeug mittels einer Antriebseinrichtung in wenigstens einer Richtung horizontal verfahrbar gelagert ist. Auf diese Weise kann einfachen Störkonturen ausgewichen werden.

Allerdings weißt auch diese Vibrationsschweißanlage Nachteile auf. Dies betrifft zunächst ein Be- und Entladen der Vibrationsschweißanlage. Hierzu muss ein Arbeiter das sperrige und unter Umständen schwere erste Fügeteil in das Unterwerkzeug einsetzen. Während dieses Vorgangs ist es erforderlich, dass er sich beispielsweise mit dem Oberkörper in die Vibrationsschweißanlage vorbeugen muss, um das Fügeteil passgenau im/am Unterwerkzeug anzuordnen. Dies ist aufgrund der sich beim Vorbeugen ergebenden Rückenbelastung für den Arbeiter nachteilig.

Selbst wenn jedoch das Einsetzen des Fügeteils in das Unterwerkzeug mittels eines Roboters erfolgt, so ergibt sich ein anderer Nachteil, insbesondere im Hinblick auf Fügeteile mit komplizierten Außenkonturen. Je komplizierter die Außenkontur des Fügeteils ist, das im Unterwerkzeug angeordnet werden muss, desto komplexer muss die Ansteuerung des Roboters sein, damit er das Fügeteil passgenau in das Unterwerkzeug einfädeln kann. Für diese Aufgabe sind daher nur hochkomplexe Roboter geeignet, die besonders kostenintensiv sind.

Hinzu kommt als weiterer Nachteil, dass auch mit der Vibrationsschweißanlage gemäß der DE 20 2005 007 282 U1 nicht alle Störkonturen umfahren werden können, insbesondere hochkomplizierte Störkonturen. Daher ist der Anwendungsbereich der bekannten Vibrationsschweißanlage entsprechend eingeschränkt.

Die technische Aufgabe der vorliegenden Erfindung ist daher die Bereitstellung einer Vibrationsschweißanlage, die die oben beschriebenen Nachteile des Standes der Technik überwindet, also insbesondere die Bereitstellung einer Vibrationsschweißanlage, die vielseitig einsetzbar sowie einfach zu be- und entladen ist.

Diese technische Aufgabe wird gelöst durch eine Vibrationsschweißanlage gemäß Patentanspruch 1 sowie ein Steuerverfahren für eine Vibrationsschweißanlage gemäß Patentanspruch 11. Weitere vorteilhafte Ausgestaltungen ergeben sich aus der nachfolgenden Beschreibung, den abhängigen Patentansprüchen sowie den Zeichnungen.

Die erfindungsgemäße Vibrationsschweißanlage umfasst einen schwingbeweglich gelagerten Werkzeugträger für ein Oberwerkzeug sowie einen Hubtisch für die Aufnahme eines Unterwerkzeugs, sodass das Unterwerkzeug mittels eines Vertikalantriebs hubbeweglich verfahrbar ist. Weiterhin weist die erfindungsgemäße Vibrationsschweißanlage mindestens einen Horizontalantrieb und mindestens einen Verschwenkantrieb auf. Mit dem mindestens einen Horizontalantrieb ist das Unterwerkzeug in einer horizontalen Richtung verfahrbar. Der Verschwenkantrieb wird zum Verschwenken des Unterwerkzeugs aus einer horizontalen Ebene verwendet.

Im Sinne der vorliegenden Beschreibung umfasst der Begriff Antrieb, und insbesondere die Begriffe Vertikalantrieb, Horizontalantrieb und Verschwenkantrieb, jegliche Vorrichtung und/oder Einrichtung, die eine Bewegung in eine Richtung bewirkt. Das Bewirken kann aus einem Antreiben in eine Richtung, vorzugsweise durch einen Linearantrieb, einer Unterstützung einer Bewegung in eine Richtung, beispielsweise durch eine Führungsvorrichtung, vorzugsweise zur Stabilisierung der Verschwenkbewegung, sowie aus einem Hemmen einer Bewegung in eine Richtung bestehen, beispielsweise durch einen Vorsprung, an dem ein Bestandteil des Hubtischs bei Bewegung in die vertikale Richtung aufliegt während der Hubtisch weiter in vertikaler Richtung verfahren wird, so dass sich eine Verschwenkbewegung des Unterwerkzeugs ergibt.

Im Folgenden wird der Betrieb der erfindungsgemäßen Vibrationsschweißanlage beschrieben, um die Merkmale und Vorteile der Vibrationsschweißanlage zu verdeutlichen. Dabei wird zunächst von einem Grundzustand ausgegangen, in dem sich das Unterwerkzeug in einer Ausgangsposition bzw. Ruheposition befindet. Die Ausgangsposition ist dadurch definiert, dass der Hubtisch sich in einer vertikalen Nullstellung bezogen auf eine z-Achse befindet, die sich senkrecht vom Boden, auf dem die Vibrationsschweißanlage steht, durch den Hubtischs in Richtung des Oberwerkzeugs erstreckt. In der vertikalen Nullstellung weist der Hubtisch beispielsweise den größtmöglichen Abstand zum Oberwerkzeug auf. Eine Bewegung des Hubtischs entlang der z-Achse wird mittels des Vertikalantriebs realisiert.

Ebenso befindet sich das auf dem Hubtisch angeordnete Unterwerkzeug in einer horizontalen Nullstellung. Zur Beschreibung der horizontalen Nullstellung wird davon ausgegangen, dass die Vibrationsschweißanlage vier gedachte oder reale Eckpunkte aufweist, die als Referenzpunkte verwendet werden. Bei den vier Eckpunkten kann es sich um vier Säulen eines Maschinenrahmens der Vibrationsschweißanlage oder vier im Raum angeordnete gegenstandslose Referenzpunkte handeln. Zwei nebeneinander angeordnete Eckpunkte definieren auf diese Weise jeweils eine horizontale Richtung. Das erste Paar an Eckpunkten definiert so die x-Richtung und das andere Paar an Eckpunkten die y-Richtung. Anders ausgedrückt kann eine auf dem Hubtisch angeordnete rechteckige Fläche, sei sie gedacht oder real, mit ihren Rändern die x- und y-Achsen definieren.

In der horizontalen Nullstellung befindet sich das Unterwerkzeug vorzugsweise mit seinem Mittelpunkt in der x- oder y-Richtung mittig zwischen zwei Eckpunkten des Hubtischs, während es in der anderen Richtung, also der y- oder x-Richtung, an einem Rand des Hubtischs angeordnet ist. Vorzugsweise ist das Unterwerkzeug in der horizontalen Nullstellung genau gegenüber einer Be- und Entladeposition angeordnet, so dass ausschließlich die Bewegung entlang einer der zwei horizontalen Achsen genügt, um von der Ausgangsposition in eine Anlageposition zu gelangen. Die Anlageposition ist dabei die Position, in der das Unterwerkzeug zum Be- und Entladen lediglich noch verschwenkt werden muss, also eine Vorposition der Be- und Entladeposition. Wie später erläutert wird kann das Unterwerkzeug alternativ auch an einer beliebigen Position innerhalb der horizontalen Ebene der vertikalen Nullstellung angeordnet werden, wobei das Unterwerkzeug in diesem Fall über mindestens zwei Horizontalantriebe beliebig in der horizontalen Ebene verfahrbar ist.

Bei einem Neuanfahren oder einer ersten Inbetriebnahme nach einem Stillstand der Vibrationsschweißanlage wird das Unterwerkzeug zum Beladen von der Ausgangsposition in die Be- und Entladeposition gebracht. Hierzu wird das Unterwerkzeug zunächst in der horizontalen Ebene in die Anlageposition verfahren, vorzugsweise nur entlang einer horizontalen Achse, beispielsweise der y-Achse. Nach Erreichen der Anlageposition wird mittels des Verschwenkantriebs das Unterwerkzeug in die Be- und Entladeposition verschwenkt, so dass ein erstes Fügeteil leicht und einfach in das Unterwerkzeug eingebracht werden kann. Im Sinne der vorliegenden Erfindung wird die Richtung einer solchen Verschwenkbewegung auch als Verschwenken nach vorne bezeichnet. Ein Verschwenken in die entgegengesetzte Richtung wird demgemäß als Verschwenken nach hinten bezeichnet, was später erläutert wird. Das Verschwenken kann alternativ auch schon gleichzeitig mit der Bewegung entlang der horizontalen Achse erfolgen, so dass ein Wechsel von der Ausgangsposition in die Be- und Entladeposition ohne Unterbrechung erfolgt. Weiterhin kann das Verschwenken alternativ auch vor dem Verfahren in horizontaler Richtung erfolgen. Beispielsweise könnte sich der Hubtisch oder ein Bestandteil des Hubtischs, und somit das Unterwerkzeug, in der vertikalen Nulllage immer in einer verschwenkten Position befinden. Dies kann beispielsweise durch entsprechend ausgebildete Vorsprünge am Maschinenrahmen realisiert werden, an denen der Hubtisch oder ein Bestandteil davon aufliegt. Dieses Beispiel für einen "hemmenden" Antrieb gemäß der obigen Definition wird später detailliert erläutert. Die grundsätzliche Art der möglichen Verschwenkungen wird später im Zusammenhang mit der Anzahl der Verschwenkantriebe diskutiert.

Aufgrund der Verschwenkbewegung kann das erste Fügeteil beispielsweise durch einen Arbeiter in das Unterwerkzeug eingebracht werden, ohne dass dieser sich vorbeugen muss. Wird das erste Fügeteil durch einen Roboter eingebracht, dann kann für dieses Einbringen ein Roboter mit einer im Vergleich zum Stand der Technik einfacheren Ansteuerung verwendet werden, da kein kompliziertes Einfädeln des ersten Fügeteils in das Unterwerkzeug mehr erforderlich ist. Dies gilt selbst für Fügeteile mit komplizierten Außenkonturen. Ein erster Vorteil der Vibrationsschweißanlage gemäß der vorliegenden Erfindung ist somit, dass ein Be- und Entladen des Unterwerkzeugs mit der erfindungsgemäßen Vibrationsschweißvorrichtung ergonomischer und einfacher im Vergleich zum Stand der Technik durchgeführt werden kann. Dies bringt natürlich auch eine gewisse Zeitersparnis mit sich, so dass der Vorgang für den Arbeiter und den Roboter effektiver abläuft.

Nach dem Beladen bewegt sich das Unterwerkzeug mit dem darin angeordneten ersten Fügeteil beispielsweise zunächst wieder in die Ausgangsposition. Von der Ausgangsposition aus wird das Unterwerkzeug mit dem darin angeordneten ersten Fügeteil gemäß einer Steuerkurve in Richtung des Oberwerkzeugs verfahren, das ein darin angeordnetes korrespondierendes zweites Fügeteil aufweist. Das zweite Fügeteil weist korrespondierende zweite Fügebereiche auf, die mit entsprechenden ersten Fügebereichen des ersten Fügeteils in Anlage gebracht werden sollen. Alternativ kann das Unterwerkzeug auch direkt von der Be- und Entladeposition aus gemäß einer Steuerkurve in Richtung des Oberwerkzeugs verfahren werden. Das Ansteuern der Ausgangsposition von der Be- und Entladeposition aus und vor dem Verfahren entlang der Steuerkurve ist jedoch aus Sicherheitsgründen bevorzugt.

Die Steuerkurve ist auf die jeweiligen zu schweißenden Fügeteile sowie deren Störkonturen abgestimmt und beispielsweise in einer Steuereinheit für eine Vielzahl von Fügeteilen hinterlegt. Grundsätzlich sind zwei Arten von Steuerkurven zu unterscheiden. Bei einer erste Art Steuerkurve wird das Unterwerkzeug im dreidimensionalen Raum von dem jeweiligen Vertikal-, Horizontal- und Verschwenk-Antrieb unabhängig von den jeweils anderen Antrieben verfahren. Dies bedeutet, dass eine Bewegung innerhalb der horizontalen Ebene, ein Verschwenken aus der horizontalen Ebene heraus und eine Bewegung entlang der z-Achse gleichzeitig erfolgen kann. Im Gegensatz dazu findet bei der zweiten Art Steuerkurve eine Bewegung immer lediglich mittels eines der jeweiligen Antriebe statt. Dies bedeutet, dass ausschließlich ein Verfahren bzw. Bewegen entlang der z-Achse, der x-Achse, der y-Achse oder ein Verschwenken erfolgt. Selbstverständlich sind Mischarten aus den beiden oben genannten Arten je nach Anwendungsgebiet möglich und gewünscht.

Die Steuerkurve eignet sich insbesondere dafür, um eventuelle Störkonturen effektiv zu umgehen. So gelangen die ersten Fügebereiche des ersten Fügeteils im Unterwerkzeug sicher in Anlage mit den zweiten Fügebereichen des zweiten Fügeteils im Oberwerkzeug. Diese Position wird als Arbeitsposition bezeichnet. In dieser Arbeitsposition kann das Unterwerkzeug mittels der erfindungsgemäßen Vibrationsschweißanlage auch aus der horizontalen Ebene heraus verschwenkt sein, je nach Anwendungsfall. Die entsprechenden ersten und zweiten Fügebereiche des ersten und zweiten Fügeteils werden dann während des Vibrationsschweißens gegeneinander gedrückt.

Ein weiterer Vorteil der vorliegenden Erfindung ist somit, dass Bauteile mit im Vergleich zum Stand der Technik kompliziert ausgebildeten Fügebereichen mit aufwendigen Störkonturen effektiv mittels der erfindungsgemäßen Vibrationsschweißanlage verschweißt werden können. Die erfindungsgemäße Vibrationsschweißanlage ist somit vielseitiger einsetzbar und damit insgesamt effizienter und wirtschaftlicher im Vergleich zu bekannten Vibrationsschweißanlagen.

Gemäß einer bevorzugten Ausführungsform umfasst der Hubtisch der Vibrationsschweißanlage eine Schiebeplatte. Dieser Schiebeplatte ist der mindestens eine Horizontalantrieb zum horizontalen Verfahren des Unterwerkzeugs zugeordnet. Auf diese Weise ist eine höhere Flexibilität gegeben, da beispielsweise der mindestens eine Horizontalantrieb der Schiebeplatte insbesondere während des Vibrationsschweißens selbst keine Kräfte aufnehmen muss und somit anders ausgelegt werden kann als beispielsweise der Vertikalantrieb des Hubtischs. Dies führt vorteilhafter Weise zu einer Kostenreduktion.

In einer weiteren bevorzugten Ausführungsform weist der Hubtisch weiterhin eine Kippplatte auf. Der Kippplatte ist der mindestens eine Verschwenkantrieb zum Verschwenken des Aufnahmewerkzeugs aus der horizontalen Ebene zugeordnet. Die Anwesenheit einer Kippplatte ist insbesondere in Kombination mit der oben erwähnten Schiebeplatte besonders sinnvoll. So ist beispielsweise entlang der vertikalen z-Achse in Richtung des Oberwerkzeugs auf dem Hubtisch zunächst die Schiebeplatte angeordnet und darauf die Kippplatte. Auf diese Weise wird zwischen den Platten auf dem Hubtisch die größtmögliche Flexibilität bei gleichzeitig geringem konstruktivem Aufwand erreicht. Eine umgekehrte Anordnung von Schiebeplatte und Kippplatte auf dem Hubtisch ist auch möglich. Eine Platte ist in diesem Zusammenhang als flächenartige Struktur zu verstehen, die durch eine Gitterkonstruktion oder eine flächige Konstruktion gebildet wird. Dasselbe gilt für die oben diskutierte Schiebeplatte.

Vorteilhafter Weise umfasst die Vibrationsschweißanlage einen ersten und einen zweiten Horizontalantrieb. Der erste Horizontalantrieb verfährt das Unterwerkzeug vorzugsweise mittels der Schiebeplatte in der ersten horizontalen Richtung, beispielsweise entlang der x-Achse. Der zweite Horizontalantrieb verfährt das Unterwerkzeug mittels der Schiebeplatte in einer von der ersten horizontalen Richtung unterschiedlichen zweiten horizontalen Richtung, die vorzugsweise im rechten Winkel zur ersten horizontalen Richtung ausgerichtet ist. Eine Bewegung in der zweiten horizontalen Richtung findet daher insbesondere entlang der y-Achse statt. Auf diese Weise kann das auf der Schiebeplatte angeordnete Unterwerkzeug beliebig innerhalb des Maschinenrahmens der Vibrationsschweißanlage auf dem Hubtisch in der Horizontalebene verfahren werden, was eine große Flexibilität der Vibrationsschweißanlage gestattet.

Ebenso vorteilhaft ist es, wenn die Vibrationsschweißanlage einen ersten und einen zweiten Verschwenkantrieb umfasst. Grundsätzlich erfolgt mittels eines ersten Verschwenkantriebs bereits ein Verschwenken der Kippplatte aus der horizontalen Ebene heraus um eine erste Drehachse. Gemäß einer beispielhaften Ausführungsform ist die Drehachse so angeordnet, dass die Kippplatte von einem Arbeiter oder Roboter weggekippt werden kann, also nach hinten gekippt werden kann. In dieser beispielhaften Ausführungsform wird das Verschwenken mittels der Kippplatte insbesondere zum Umfahren von Störkonturen und/oder zum Anschweißen weiterer Elemente und nicht zum Be- und Entladen verwendet. In einer anderen beispielhaften Ausführungsform ist die Drehachse so angeordnet, dass die Kippplatte einem Arbeiter oder Roboter entgegengekippt werden kann, also nach vorne kippt. Dies ist besonders beim Be- und Entladen vorteilhaft. Im Hinblick auf den Begriff Antrieb wird auf die Definition am Anfang verwiesen. Wie ebenfalls bereits erwähnt kann der erste Verschwenkantrieb auch nur aus Vorsprüngen bestehen, auf denen die Kippplatte aufliegt, so dass sich in der vertikalen Nullstellung des Hubtischs immer eine aus der horizontalen Ebene verschwenkte Position des Unterwerkzeugs bzw. der Kippplatte ergibt. In Abhängigkeit von der Art des ersten Verschwenkantriebs und der Anordnung des zweiten Verschwenkantriebs kann dieser entweder den ersten Verschwenkantrieb unterstützen oder ein Verschwenken um eine zweite Drehachse bewirken. Das Verschwenken um eine Drehachse ist insbesondere beim Be- und Entladen eines Bauteils sinnvoll.

Zweckmäßigerweise umfasst die Vibrationsschweißanlage weiterhin einen dritten Verschwenkantrieb. Mittels des dritten Verschwenkantriebs ist eine Verschwenkung nicht nur um eine Drehachse, sondern auch um einen Drehpunkt möglich. Dies erhöht die Flexibilität bzw. den Freiheitsgrad der erfindungsgemäßen Vibrationsschweißanlage beim Umfahren von möglichen Störkonturen der Fügeteile beim Ansteuern der Arbeitsposition. Im Hinblick auf die Art der jeweils verwendeten Verschwenkantriebe wird auf die nachfolgenden Ausführungen verwiesen.

Besonders vorteilhaft ist es, wenn die Vibrationsschweißanlage vier Verschwenkantriebe umfasst. Bei einer Kippplatte mit beispielsweise vier Ecken kann jeder Ecke oder jeder Kante ein Verschwenkantrieb zugeordnet sein. Auf diese Weise ergeben sich vorzugsweise vier Drehpunkte in jeweils einer Ecke, um die stabil und sicher eine Verschwenkung erfolgen kann. Bei der Anordnung der vier Verschwenkantriebe in den jeweiligen Ecken stellt bei der Verschwenkung um einen Drehpunkt einer der Verschwenkantriebe einen "hemmenden" Antrieb gemäß der anfänglichen Antriebsdefinition dar. Hierbei handelt es sich um den Antrieb, der am oder im Drehpunkt angeordnet ist. Nun gibt es beispielsweise zwei Möglichkeiten zur Anordnung der aktiven oder "antreibenden" Antriebe gemäß der anfänglichen Antriebsdefinition. Zunächst kann der dem "hemmenden" Antrieb diagonal gegenüberliegende Verschwenkantrieb als "antreibender" Verschwenkantrieb ausgebildet sein. Die übrigen beiden Verschwenkantriebe können in diesem Fall als "unterstützende" oder ebenfalls als "antreibende" Verschwenkantriebe ausgebildet sein, wobei auch nur einer davon als "unterstützend" und der andere als "antreibend" vorgesehen sein kann. In der zweiten Variante ist der dem "hemmenden" Verschwenkantrieb diagonal gegenüberliegende Verschwenkantrieb als "unterstützender" Antrieb ausgebildet. Mindestens einer von den beiden übrigen Verschwenkantrieben muss dann als "antreibender" Antrieb ausgebildet sein. Der übrige Verschwenkantrieb kann als "unterstützender" oder ebenfalls als "antreibender" Antrieb ausgebildet sein. So wird ein größtmöglicher Freiheitsgrad bei gleichzeitiger erhöhter Stabilität gewährleistet. Insbesondere während des Verfahrens bzw. Bewegens der flächenartigen Struktur zur Bauteilunterstützung entlang einer Steuerkurve bietet sich das Verschwenken um einen Drehpunkt an, da auf diese Weise in beliebige Richtungen Störkonturen umfahren werden können. Ebenso kann ein entsprechendes in Eingriff bringen des ersten Fügeteils im Unterwerkzeug mit dem korrespondierende zweiten Fügeteil im Oberwerkzeug genauer gesteuert werden.

In einer weiteren bevorzugten Ausführungsform ist mindestens einer von dem Vertikalantrieb, dem mindestens einen Horizontalantrieb und dem mindestens einen Verschwenkantrieb ausgewählt aus der Gruppe der vibrationsunempfindlichen Antriebe. Dies heißt, dass ein entsprechender Antrieb insbesondere aus der Gruppe der Ketten- oder Riemenantriebe ausgewählt ist. Diese Art von Antrieb kann auch während des Vibrationsschweißprozesses selbst belastet werden, so dass er sich beispielsweise besonders für den Vertikalantrieb eignet. Befindet sich das Unterwerkzeug während des Vibrationsschweißprozesses selbst nicht in der Horizontalebene, sondern ist daraus verschwenkt, dann sollte auch für den Verschwenkantrieb eine entsprechende Antriebsgattung verwendet werden. Auf diese Weise kann eine frühzeitige Beschädigung bzw. ein erhöhter Verschleiß des jeweiligen Antriebs vermieden werden. Für den mindestens einen Horizontalantrieb, der üblicherweise während des Vibrationsschweißprozesses keinen Kräften vom Vibrationsschweißen ausgesetzt ist, können auch beliebige andere Antriebsarten, wie Spindelantriebe, pneumatische Antriebe oder elektrische Antriebe, verwendet werden.

Weiterhin bevorzugt ist, dass die Vibrationsschweißanlage Steuermittel aufweist, mit denen der Vertikalantrieb, der mindestens eine Horizontalantrieb und der mindestens eine Verschwenkantrieb ansteuerbar sind, so dass ein Unterwerkzeug gemäß einer Steuerkurve verfahrbar ist. Im Hinblick auf die unterschiedlichen Ausgestaltungsarten der Steuerkurve wird auf die obigen Ausführungen zum Betrieb der Vibrationsschweißanlage verwiesen.

Vorteilhafterweise ist die Vibrationsschweißanlage von einem Gehäuse umgeben, das eine Schutztür aufweist. Diese Schutztür ist nur zum Be- und Entladen geöffnet, beispielsweise ab Erreichen der Anlageposition. Die Schutztür dient insbesondere als Eingriffsschutz für den Arbeiter sowie zum Lärmschutz beim Betrieb der Vibrationsschweißanlage.

Ein erfindungsgemäßes Steuerverfahren für eine Vibrationsschweißanlage, insbesondere für eine erfindungsgemäße Vibrationsschweißanlage, umfasst die folgenden Schritte: Ansteuern eines Vertikalantriebs, um einen Hubtisch in einer vertikalen Richtung zum Boden zu verfahren, Ansteuern mindestens eines Horizontalantriebs, um das Unterwerkzeug in einer horizontalen Richtung zum Boden zu verfahren sowie Ansteuern mindestens eines Verschwenkantriebs, um das Unterwerkzeug aus einer horizontalen Ebene zu verschwenken. Zu den Details und Abläufen des Steuerverfahrens wird auf die obige Beschreibung des Betriebs der erfindungsgemäßen Vibrationsschweißanlage verwiesen.

Mit dem erfindungsgemäßen Steuerverfahren können alle Vorteile realisiert werden, die bereits im Zusammenhang mit der erfindungsgemäßen Vibrationsschweißanlage beschrieben wurden. Hierbei ist es zweckmäßig, wenn das Ansteuern der jeweiligen Antriebe gemäß einer Steuerkurve erfolgt.

Das Ansteuern des mindestens einen Verschwenkantriebs kann insbesondere zum Be- und Entladen der Vibrationsschweißanlage oder zum Umfahren von Störkonturen erfolgen. Auch während des Vibrationsschweißprozesses selbst kann das Unterwerkzeug aus der horizontalen Ebene heraus verschwenkt sein.

Im Folgenden wird die vorliegende Erfindung detailliert anhand der Zeichnungen erläutert. Gleiche Bauteile sind in unterschiedlichen Ausführungsformen mit den gleichen Bezugszeichen versehen. Es zeigen:
- Figur 1: eine Rückansicht einer ersten Ausführungsform einer Vibrationsschweißanlage,
- Figur 2: eine Vorderansicht der Vibrationsschweißanlage aus Figur 1,
- Figur 3: eine Vorderansicht der Vibrationsschweißanlage aus Figur 1 mit verschwenkter Kippplatte,
- Figur 4a: eine vergrößerte Ansicht des rechten Bereichs zwischen Schiebeplatte und Kippplatte aus Figur 3,
- Figur 4b: eine vergrößerte Ansicht des linken Bereichs zwischen Schiebeplatte und Kippplatte aus Figur 3,
- Figur 5: eine Rückansicht eines Ausschnitts einer zweiten Ausführungsform einer Vibrationsschweißanlage,
- Figur 6: eine Seitenansicht der zweiten Ausführungsform der Vibrationsschweißanlage,
- Figur 7: eine schematische Ansicht einer dritten Ausführungsform einer Vibrationsschweißanlage in einer Ausgangsposition,
- Figur 8: eine schematische Ansicht der Vibrationsschweißanlage aus Figur 7 in einer vorderen Anlageposition,
- Figur 9: eine schematische Ansicht der Vibrationsschweißanlage aus Figur 7 in einer vorderen Anlageposition mit geöffneter Schutztür,
- Figur 10: eine schematische Ansicht der Vibrationsschweißanlage aus Figur 7 in einer Be- und Entladeposition.

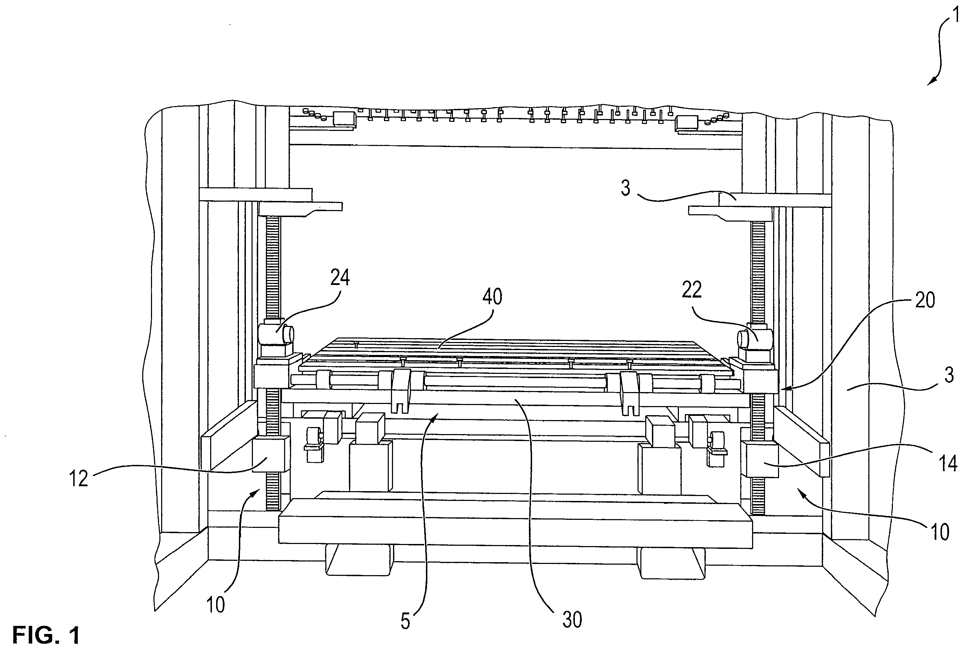

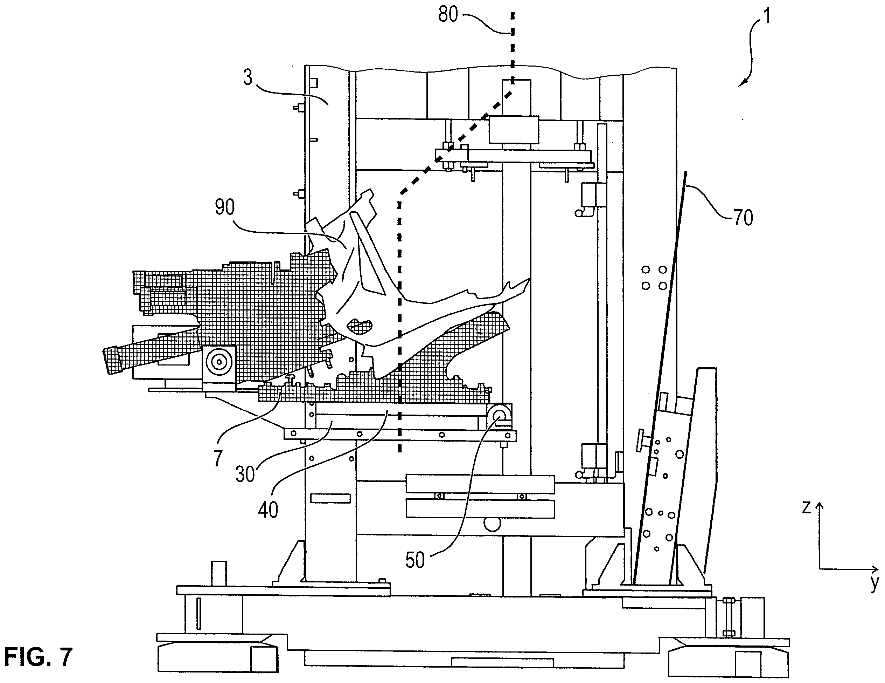

Zunächst wird in den Figuren 1 bis 6 auf die beispielhaften Konstruktionen der Vibrationsschweißanlage eingegangen. Eine Erläuterung der erfindungsgemäßen Funktionen während des Betriebs erfolgt anschließend unter Bezugnahme auf die Figuren 7 bis 10.

Figur 1 zeigt die Rückansicht einer ersten Ausführungsform einer erfindungsgemäßen Vibrationsschweißanlage 1. Die Vibrationsschweißanlage weist einen Maschinenrahmen 3 auf. Innerhalb des Maschinenrahmens 3 ist ein Hubtisch 5 angeordnet. Der Hubtisch 5 umfasst eine Schiebeplatte 30 und eine darauf angeordnete Kippplatte 40. Mindestens eine dieser Platten ist vorzugsweise als Befestigungsstruktur oder flächenartige Struktur ausgebildet.

Weiterhin verfügt der Hubtisch 5 über einen Vertikalantrieb 10, der im vorliegenden Ausführungsbeispiel eine erste 12 und eine zweite Antriebseinheit 14 umfasst. Bei der ersten 12 und zweiten Antriebseinheit 14 handelt es sich insbesondere um einen Ketten- oder Riemenantrieb. Weiterhin weist die Vibrationsschweißanlage 1 gemäß Figur 1 einen ersten Verschwenkantrieb 20 auf, der aus einer ersten 22 und einer zweiten Antriebseinheit 24 besteht. Bei diesem Verschwenkantrieb 20 handelt es sich daher um einen "antreibenden" Antrieb gemäß der zu Beginn gewählten Antriebsdefinition.

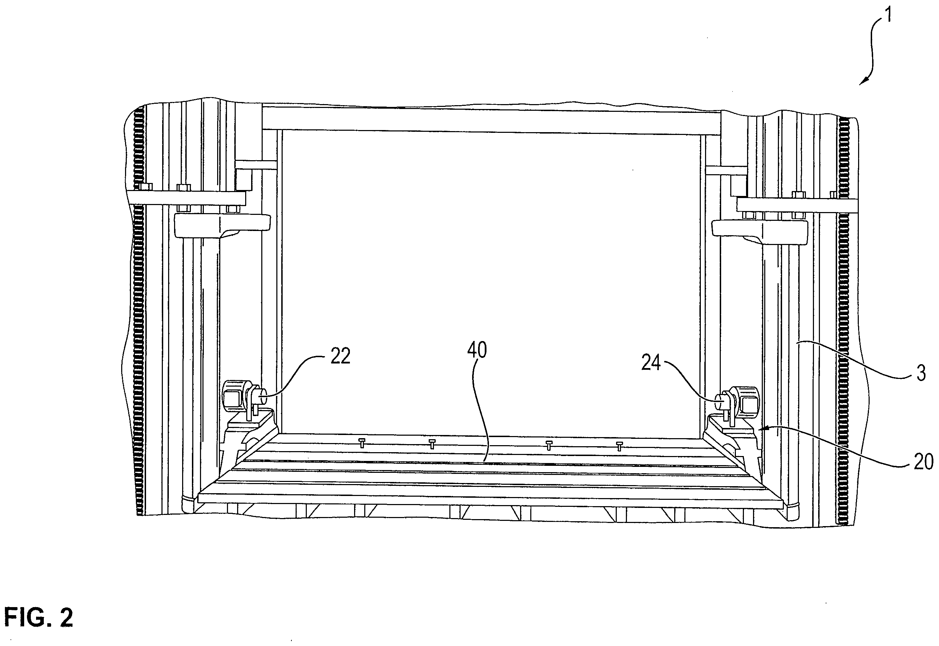

Figur 2 stellt eine Vorderansicht der Vibrationsschweißanlage aus Figur 1 dar. Hierin ist insbesondere die Kippplatte 40 mit der ersten 22 und der zweiten Antriebseinheit 24 des Verschwenkantriebs 20 erkennbar.

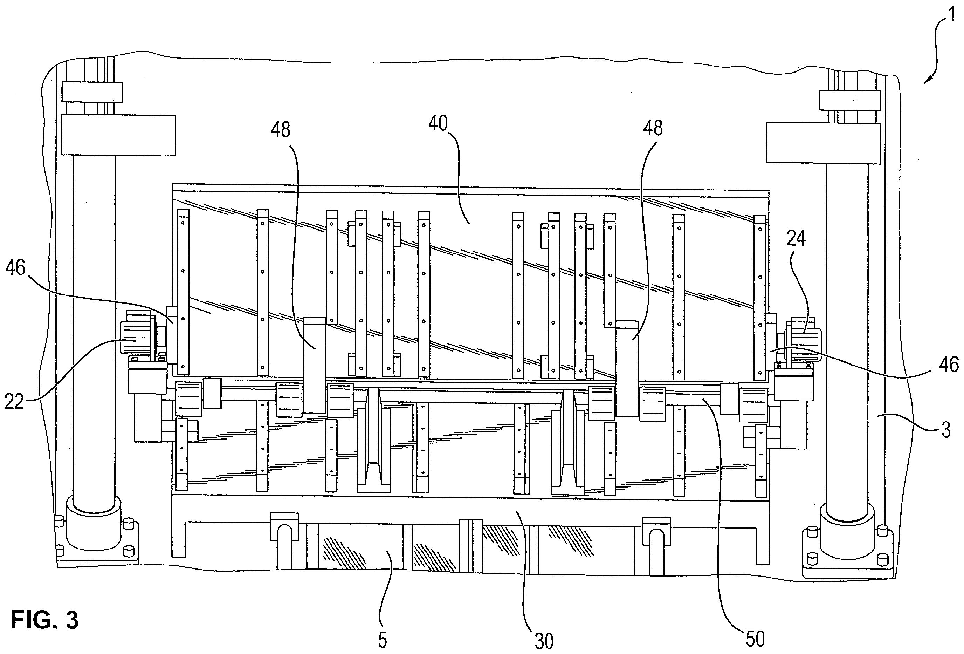

In Figur 3 ist die Kippplatte 40 im Verhältnis zur Schiebeplatte 30 verschwenkt dargestellt. Es ist erkennbar, dass die Schiebeplatte 30 auf ihrer der Kippplatte 40 zugewandten Seite Querrippen aufweist, die mit entsprechenden Querrippen auf der der Schiebeplatte 30 zugewandten Seite der Kippplatte 40 zusammenwirken, wenn die Kippplatte 40 in der horizontalen Ebene auf der Schiebeplatte 30 angeordnet ist. Auf diese Weise werden die Kippplatte 40 und die Schiebeplatte 30 zueinander ausgerichtet.

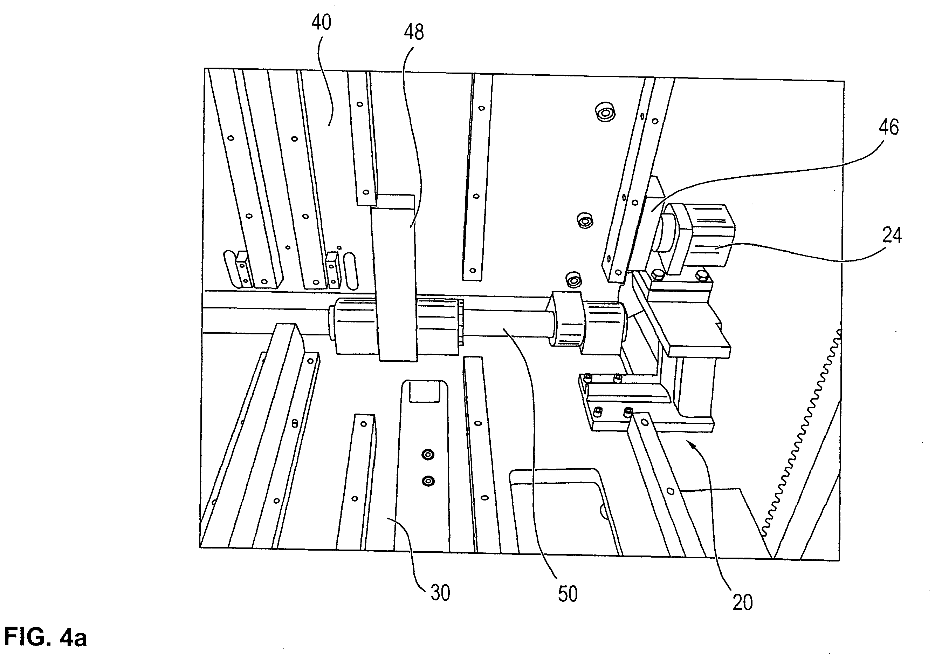

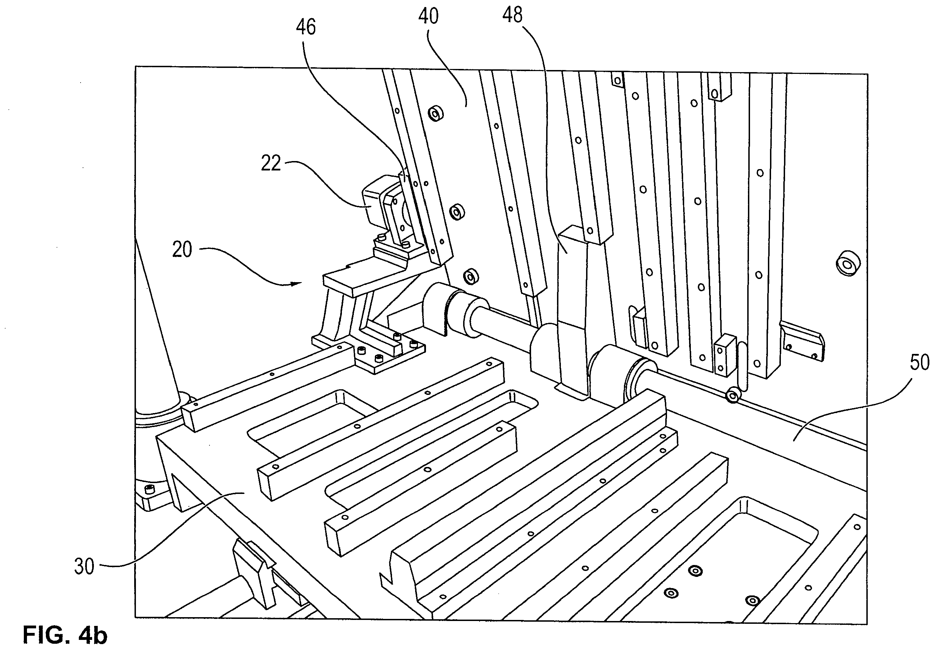

Aus Figur 3 ist weiterhin eine Drehachse 50 ersichtlich, um die die Kippplatte 40 verschwenkt wird. Zum Verschwenken der Kippplatte 40 aus der Horizontalebene heraus weisen die erste 22 und die zweite Antriebseinheit 24 ein Hebelelement 46 auf, das an der Kippplatte 40 befestigt ist. Die Kippplatte 40 weist Stützelemente 48 auf, von denen zwei Stück an der Drehachse 50 zur Unterstützung der Kippplatte 40 angeordnet sind. In den Figuren 4a und 4b ist der Übergang zwischen der Kippplatte 40 und der Schiebeplatte 30 für die jeweilige rechte bzw. linke Seite aus Figur 3 vergrößert dargestellt.

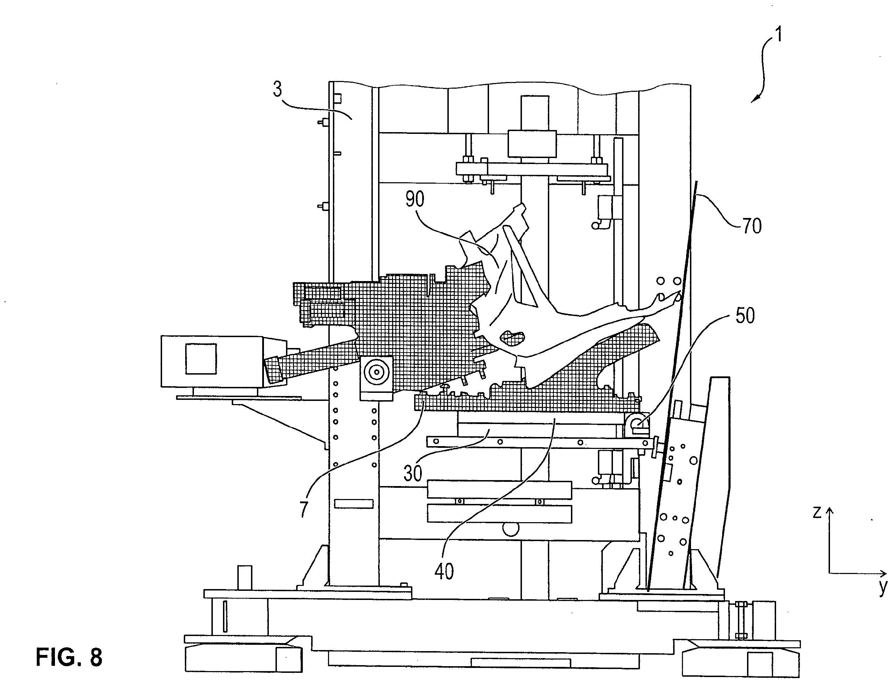

In der oben beschriebenen ersten Ausführungsform ist die Drehachse 50 so angeordnet, dass die Kippplatte 40 von einem Arbeiter oder Roboter wegkippt, also nach hinten kippt. Die Verschwenkfähigkeit des Unterwerkzeugs wird daher insbesondere zum Umfahren von Störkonturen verwendet. Bei einer möglichen Anwendung wird mit der Vibrationsschweißanlage gemäß der ersten Ausführungsform in eine Armaturentafel ein Luftkanal eingeschweißt. Zum Beladen der Vibrationsschweißanlage und für einen ersten Vibrationsschweißschritt wird die Verfahrbarkeit entlang der z-Achse sowie in der horizontalen Ebene (x,y) benötigt, was später unter Bezugnahme auf die Figuren 8 bis 10 detailliert erläutert wird. Nachdem der Luftkanal eingeschweißt wurde, wird die Armaturentafel nach hinten aus der horizontalen Ebene verschwenkt, um in einem zweiten Schritt weitere Elemente einzuschweißen. Während dieses zweiten Schweißschritts ist das Unterwerkzeug daher aus der horizontalen Ebene verschwenkt. Ein nach hinten Verschwenken kann auch schon, wie oben erwähnt, zum Umfahren von Störkonturen verwendet werden, beispielsweise während des Verfahrens entlang der z-Achse in Richtung Oberwerkzeug.

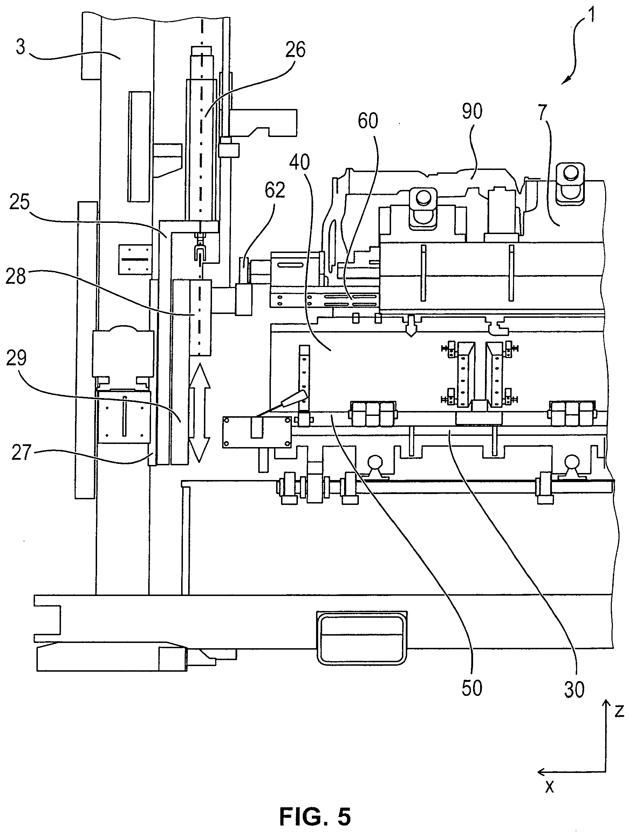

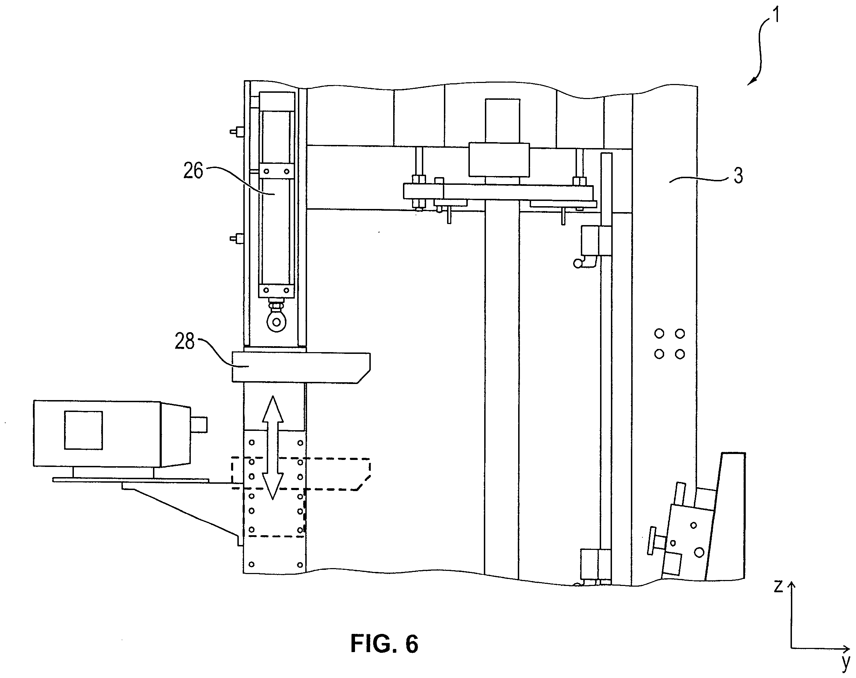

In den Figuren 5 und 6 ist eine zweite bevorzugte Ausführungsform einer Vibrationsschweißanlage 1 dargestellt. Der erste Verschwenkantrieb 20 setzt sich aus einer Antriebseinheit 26 sowie einer Auflagevorrichtung 28 zusammen. Die Antriebseinheit 26 ist in einer Aufnahme 25 angeordnet, die über eine Anschraubplatte 27 mit dem Maschinenrahmen 3 verbunden ist. Mittels der Antriebseinheit 26 wird die Auflagevorrichtung 28 in vertikaler Richtung entlang einer Linearführung 29 verfahren. Die Kippplatte 40 umfasst in dieser Ausführungsform eine Stützeinrichtung 60, die Rollen 62 aufweist. Aufgrund der auf der Auflagevorrichtung 28 laufenden Rollen 62 findet somit ein Verschwenken der Kippplatte 40 aus der horizontalen Ebene der Schiebeplatte 30 statt. Die nicht dargestellte und in x-Richtung liegende Seite ist analog aufgebaut.

Alternativ zu dem gerade beschriebenen Aufbau kann der Maschinenrahmen 3 die Auflagevorrichtung 28 auch in einer unveränderlichen Höhe aufweisen, so dass sich in einer vertikalen Nullstellung des Hubtischs, die später erläutert wird, immer eine aus der horizontalen Ebene verschwenkte Position des Unterwerkzeugs ergibt. Der Verschwenkantrieb wäre dann als "hemmender" Antrieb gemäß der Antriebsdefinition ausgebildet. Unter Umständen muss die Auflagefläche der Auflagevorrichtung 28 in y-Richtung in Abhängigkeit von der Vibrationsschweißanlage 1 und einer möglichen Bewegung entlang der y-Achse vergrößert werden.

Mit der Vibrationsschweißanlage gemäß den Figuren 5 und 6 kann die Kippplatte 40 zum Be- und Entladen aus der horizontalen Ebene hin zu einem Arbeiter oder Roboter verschwenkt werden, was ein Beladen durch einen Roboter oder einen Arbeiter vereinfacht. Insbesondere entfällt ein kompliziertes Einfädeln in das Unterwerkzeug 7. Daher kann zum Einsetzen eines ersten Fügeteils 90 in das Unterwerkzeug 7 ein Roboter mit einer einfacheren Steuerung im Vergleich zu einer Robotersteuerung für ein nicht aus der horizontalen Ebene heraus verschwenkbares Unterwerkzeug 7 verwendet werden.

Im Folgenden wird insbesondere auf die erfindungsgemäße Funktion der Vibrationsschweißanlage beim Be- und Entladevorgang mittels der Figuren 7 bis 10 eingegangen. Figur 7 zeigt die Vibrationsschweißanlage 1 mit einem Maschinenrahmen 3 sowie einem Unterwerkzeug 7, in dem das erste Fügeteil 90 angeordnet ist. Das Unterwerkzeug 7 befindet sich in der Ausgangsposition, die durch einen maximalen Abstand zum nicht dargestellten Oberwerkzeug sowie zu einer bevorzugten Schutztür 70 bzw. einer Anlageposition gekennzeichnet ist.

Die Ausgangsposition ist somit dadurch definiert, dass der nicht dargestellte Hubtisch sich in einer vertikalen Nullstellung bezogen auf die in den Figuren 7 bis 10 angedeutete z-Achse befindet, die sich senkrecht vom Boden durch den Hubtisch in Richtung des Oberwerkzeugs erstreckt. Ebenso befindet sich das auf dem Hubtisch angeordnete Unterwerkzeug in einer horizontalen Nullstellung. Hierzu wird auf die in den Figuren 7 bis 10 eingezeichnete y-Achse Bezug genommen. Die x-Achse erstreckt sich senkrecht zur y-Achse und durch die Figuren hindurch. In der horizontalen Nullstellung befindet sich das Unterwerkzeug 7 in der x- Richtung mittig zwischen zwei Eckpunkten der Vibrationsschweißanlage 1, beispielsweise zwei Ecksäulen des Maschinenrahmens 3. In y-Richtung ist das Unterwerkzeug 7 an einem Rand der Vibrationsschweißanlage 1 bzw. des Hubtischs angeordnet. Vorzugsweise ist das Unterwerkzeug in der horizontalen Nullstellung genau gegenüber der Be- und Entladeposition angeordnet, so dass ausschließlich die Bewegung entlang der y-Achse genügt, um von der Ausgangsposition (Fig. 7) in die Anlageposition und umgekehrt zu wechseln. Alternativ können zwei Horizontalantriebe vorgesehen sein, von denen jeder eine Bewegung der Schiebeplatte 30 entlang einer der x- und y-Achse realisieren kann, so dass die Schiebeplatte 30 beliebig in einer horizontalen Ebene verfahrbar ist, wie später erläutert.

Weiterhin ist in Figur 7 eine Steuerkurve 80 dargestellt, entlang der das Unterwerkzeug 7 in eine Arbeitsposition zum Vibrationsschweißen bzw. Zusammenführen des ersten Fügeteils 90 im Unterwerkzeug 7 mit dem korrespondierenden zweiten Fügeteil im Oberwerkzeug (nicht dargestellt) verfahren wird. Die mit dem Bezugszeichen 70 versehene Schutztür dient sowohl dem Lärmschutz als auch dem sonstigen Schutz eines Arbeiters. So kann der Arbeiter im Betrieb der Vibrationsschweißanlage 1 nicht in diese greifen.

In Figur 8 befindet sich das Unterwerkzeug 7 in einer Anlageposition. Dies bedeutet, dass das Unterwerkzeug 7 in einer horizontalen Ebene in Richtung der Schutztür 70 verfahren wurde.

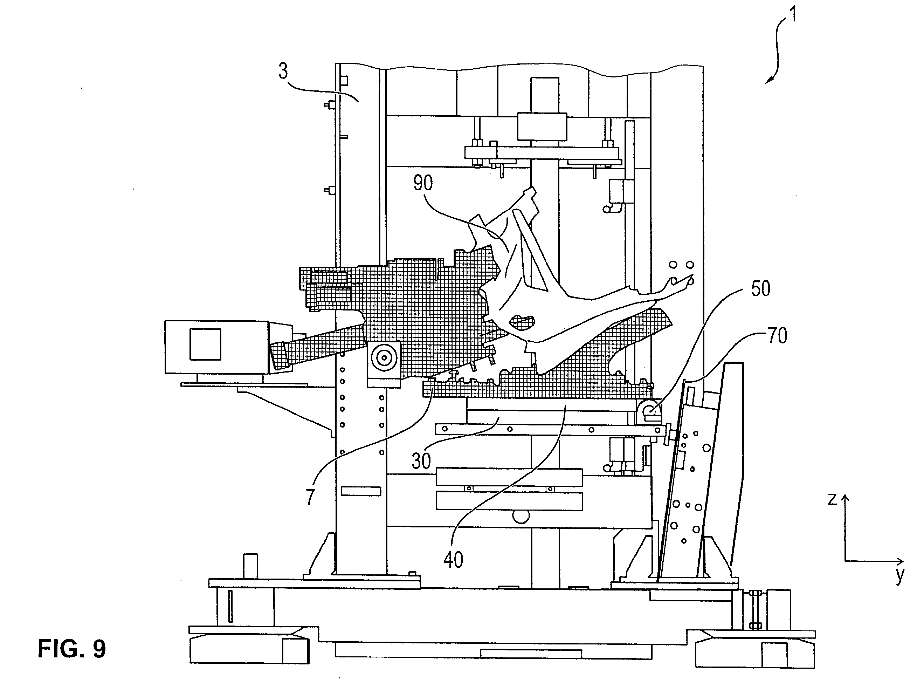

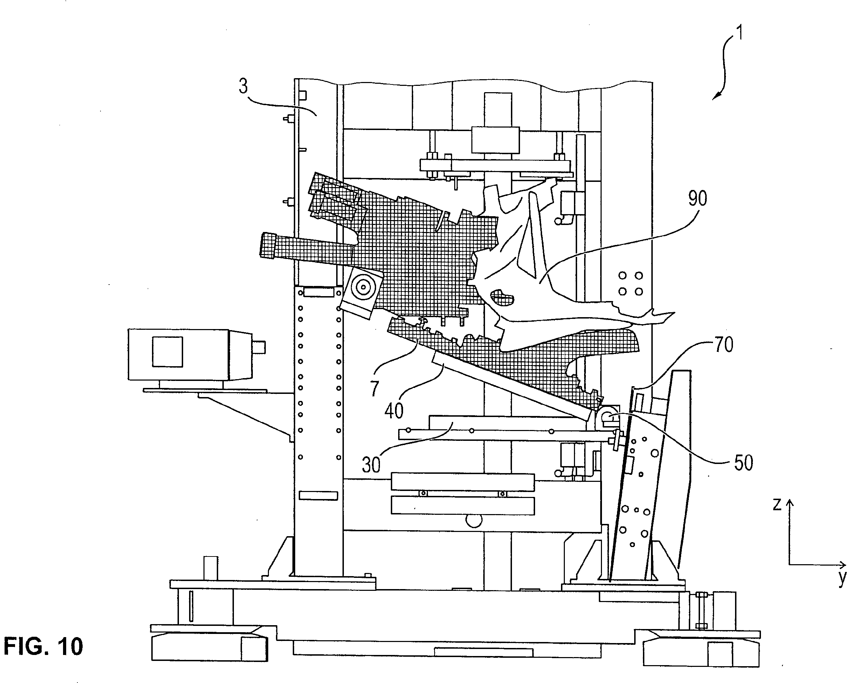

Figur 9 zeigt den nächsten Schritt, in dem die Schutztür 70 geöffnet wurde. Nun wird zum Be- und Entladen das Unterwerkzeug 7 um eine Drehachse verschwenkt. Das Verschwenken erfolgt hierbei Bezug nehmend auf Figur 10 nach rechts, was gemäß der Definition der vorliegenden Erfindung einem Verschwenken nach vorne entspricht, da ein Arbeiter oder Roboter von der rechten Seite aus, bezogen auf Figur 10, das Unterwerkzeug 7 belädt. Ein Verschwenken in die entgegengesetzte Richtung, also nach links bezogen auf Figur 10, wird im Sinne der vorliegenden Erfindung als Verschwenken nach hinten bezeichnet. Die Be- und Entladeposition selbst ist in Figur 10 dargestellt. Nach dem Beladen bewegt sich das Unterwerkzeug 7 zurück in die Ausgangsposition.

Von der Ausgangsposition aus wird das Unterwerkzeug 7 dann in Richtung auf das Oberwerkzeug entlang der Steuerkurve 80 verfahren. Alternativ kann das Unterwerkzeug 7 auch direkt von der Be- und Entladeposition aus gemäß einer Steuerkurve in Richtung des Oberwerkzeugs verfahren werden. Während des Verfahrens entlang der Steuerkurve 80 kann eine Einstellung des Verschwenkwinkels, der Verschwenkrichtung sowie eine Verschiebung innerhalb der horizontalen Ebene erfolgen. Hierzu weist die Vibrationsschweißanlage 1 einen ersten Horizontalantrieb auf, der entlang einer ersten horizontalen Richtung, beispielsweise entlang der x-Achse, wirksam ist. Weiterhin weist die Vibrationsschweißanlage 1 vorzugsweise einen zweiten Horizontalantrieb auf, der in eine zweite horizontale Richtung wirksam ist, beispielsweise entlang der y-Achse. Eine jeweilige Änderung entlang der vertikalen Achse z, in der horizontalen Ebene x, y sowie eine Änderung des Verschwenkwinkels oder der Verschwenkrichtung können getrennt voneinander oder gleichzeitig erfolgen. Somit werden entweder alle Antriebe unabhängig voneinander angesteuert oder die Antriebe werden jeweils einzeln bzw. abhängig voneinander angesteuert. Auch beliebige Kombinationen sind hierbei möglich, so dass beispielsweise ein Verfahren innerhalb der horizontalen Ebene gleichzeitig mit dem vertikalen Verfahren stattfindet, während ein Verschwenken ausschließlich dann stattfindet, wenn keiner der anderen Antriebe, also Vertikal- und Horizontalantriebe, angesteuert wird. Auf beide Weisen sowie auch durch mögliche Kombinationen daraus wird erreicht, dass komplizierte Störkonturen umgangen werden können und die zu verschweißenden Fügeteile sicher miteinander in Anlage gebracht werden können. Bezug nehmend auf die gestrichelt dargestellte Steuerkurve 80 kann die Kombination aus Schiebe- 30 und Kippplatte 40 mit der erfindungsgemäßen Vibrationsschweißanlage 1 beispielsweise derart verfahren bzw. bewegt werden, dass die Steuerkurve zumindest annähernd senkrecht auf der Kippplatte 40 steht. Entsprechend erzeugen die verschiedenen Antriebe die räumliche Position und Ausrichtung der Schiebe- 30 und Kippplatte 40.

Nachdem die maximale Höhe in vertikaler Richtung entlang der z-Achse erreicht wurde, also das erste Fügeteil 90 im Unterwerkzeug 7 in Anlage mit dem korrespondierenden zweiten Fügeteil im Oberwerkzeug gebracht wurde, findet der eigentliche Vibrationsschweißprozess statt. Dies kann auch im aus der horizontalen Ebene verschwenkten Zustand erfolgen, wobei dann ein geeigneter Antrieb gewählt werden muss, wie bereits oben beschrieben. Nach Beendigung des Vibrationsschweißprozesses wird der Hubtisch 5 mit dem Unterwerkzeug wieder nach unten gefahren, beispielsweise in die Ausgangsposition. Von hier aus wird das Unterwerkzeug 7 dann in die Be- und Entladeposition zur Entnahme des Bauteils gebracht, wobei anschließend direkt ein neues Fügeteil 90 in das Unterwerkzeug 7 eingesetzt werden kann und der Ablauf kann sich entsprechend wiederholen.

## Patentansprüche

1. Vibrationsschweißanlage (1), umfassend:
a) einen schwingbeweglich gelagerten Werkzeugträger für ein Oberwerkzeug sowie
b) einen Hubtisch (5) für die Aufnahme eines Unterwerkzeugs (7), so dass das Unterwerkzeug (7) mittels eines Vertikalantriebs (10) hubbeweglich verfahrbar ist, wobei die Vibrationsschweißanlage (1) weiterhin aufweist:
c) mindestens einen Horizontalantrieb, mit dem das Unterwerkzeug (7) in einer horizontalen Richtung verfahrbar ist, **dadurch gekennzeichnet, dass** die Vibrationsschweißanlage weiter
d) mindestens einen Verschwenkantrieb (20, 22) umfasst, mit dem das Unterwerkzeug (7) zusätzlich aus einer horizontalen Ebene verschwenkbar ist.

2. Vibrationsschweißanlage (1) gemäß Patentanspruch 1, wobei der Hubtisch (5) eine Schiebeplatte (30) umfasst, der der mindestens eine Horizontalantrieb zum horizontalen Verfahren des Unterwerkzeugs (7) zugeordnet ist.

3. Vibrationsschweißanlage (1) gemäß Patentanspruch 2, wobei der Hubtisch (5) weiterhin eine Kippplatte (40) aufweist, der der mindestens eine Verschwenkantrieb (20) zum Verschwenken des Unterwerkzeugs (7) aus der horizontalen Ebene zugeordnet ist.

4. Vibrationsschweißanlage (1) gemäß einem der vorhergehenden Patentansprüche, die einen ersten und einen zweiten Horizontalantrieb umfasst.

5. Vibrationsschweißanlage (1) gemäß Patentanspruch 4, wobei mit dem ersten Horizontalantrieb das Unterwerkzeug (7) in einer ersten horizontalen Richtung und mit dem zweiten Horizontalantrieb in einer zweiten Richtung verfahrbar ist, die vorzugsweise einen rechten Winkel mit der ersten horizontalen Richtung bildet.

6. Vibrationsschweißanlage (1) gemäß einem der vorhergehenden Patentansprüche, die einen ersten (20) und einen zweiten Verschwenkantrieb (22) umfasst.

7. Vibrationsschweißanlage (1) gemäß Patentanspruch 6, wobei die Vibrationsschweißanlage (1) weiterhin einen dritten Verschwenkantrieb aufweist.

8. Vibrationsschweißanlage (1) gemäß Patentanspruch 7, wobei die Vibrationsschweißanlage (1) weiterhin einen vierten Verschwenkantrieb umfasst.

9. Vibrationsschweißanlage (1) gemäß einem der vorhergehenden Patentansprüche, wobei mindestens einer von dem Vertikalantrieb (10), dem mindestens einen Horizontalantrieb sowie dem mindestens einen Verschwenkantrieb (20, 22) ausgewählt ist aus der Gruppe der vibrationsunempfindlichen Antriebe, insbesondere der Ketten- und Riemenantriebe.

10. Vibrationsschweißanlage (1) gemäß einem der vorhergehenden Patentansprüche, die weiterhin Steuermittel aufweist, mit denen der Vertikalantrieb (10), der mindestens eine Horizontalantrieb und der mindestens eine Verschwenkantrieb (20, 22) ansteuerbar sind, so dass ein Unterwerkzeug (7) gemäß einer Steuerkurve (80) verfahrbar ist.

11. Steuerverfahren für eine Vibrationsschweißanlage, insbesondere für eine Vibrationsschweißanlage (1) gemäß einem der Patentansprüche 1 bis 10, umfassend die folgende Schritte:
a) Ansteuern eines Vertikalantriebs (10), um einen Hubtisch (5) in einer vertikalen Richtung zum Boden zu verfahren,
b) Ansteuern mindestens eines Horizontalantriebs, um das Unterwerkzeug (7) in einer horizontalen Richtung zum Boden zu verfahren, **dadurch gekennzeichnet, dass** das Steuerverfahren den weiteren folgenden Schritt umfasst:
c) Ansteuern mindestens eines Verschwenkantriebs (20, 22), um das Unterwerkzeug (7) aus einer horizontalen Ebene zu verschwenken.

12. Steuerverfahren gemäß Patentanspruch 11, wobei das Ansteuern der jeweiligen Antriebe (10, 20, 22) gemäß einer Steuerkurve (80) erfolgt.

## Claims

1. A vibration welding device (1), comprising:
a) a tool carrier for an upper tool, being mounted oscillatingly movable;
b) a lifting table (5) for receiving a lower tool (7), so that the lower tool (7) can be liftably moved by means of a vertical drive (10), wherein the vibration welding device (1) further comprises:
c) at least one horizontal drive, by means of which the lower tool (7) is movable in a horizontal direction, **characterized in that** the vibration welding device (1) further comprises:
d) at least one pivoting drive (20, 22), by means of which the lower tool (7) is additionally pivotable out of a horizontal plane.

2. Vibration welding device (1) according to claim 1, wherein the lifting table (5) comprises a sliding plate (30), which is associated with the at least one horizontal drive for a horizontal movement of the lower tool (7).

3. Vibration welding device (1) according to claim 2, wherein the lifting table (5) further comprises a tilting plate (40), which is associated with the at least one pivoting drive (20) for pivoting the lower tool (7) out of the horizontal plane.

4. Vibration welding device (1) according to one of the preceding claims, comprising a first and a second horizontal drive.

5. Vibration welding device (1) according to claim 4, wherein the lower tool (7) is movable in a first horizontal direction by the first horizontal drive and in a second direction by the second horizontal drive, wherein the second direction preferably forms a right angle with the first horizontal direction.

6. Vibration welding device (1) according to one of the preceding claims, comprising a first (20) and a second pivoting drive (22).

7. Vibration welding device (1) according to claim 6, wherein the vibration welding device (1) further comprises a third pivoting drive.

8. Vibration welding device (1) according to claim 7, wherein the vibration welding device (1) further comprises a fourth pivoting drive.

9. Vibration welding device (1) according to one of the preceding claims, wherein at least one of either the vertical drive (10), the at least one horizontal drive and the at least one pivoting drive (20, 22) is selected from the group of vibration-insensitive drives, particularly chain and belt drives.

10. Vibration welding device (1) according to one of the preceding claims, further comprising a control means by means of which the vertical drive (10), the at least one horizontal drive and the at least one pivoting drive (20, 22) are controllable, so that a lower tool (7) is movable according to a control curve (80).

11. Control method for a vibration welding device, particularly for a vibration welding device (1) according to one of the claims 1 to 10, comprising the following steps:
a) controlling a vertical drive (10) to move a lifting table (5) in a vertical direction to the ground,
b) controlling at least one horizontal drive to move the lower tool (7) in a horizontal direction to the ground, **characterized in that** the control method comprises the further following step:
c) controlling at least one pivoting drive (20, 22) to pivot the lower tool (7) out of a horizontal plane.

12. Control method according to claim 11, wherein the controlling of the respective drives (10, 20, 22) is realized according to a control curve (80).

## Revendications

1. Installation de soudage par vibration (1), comportant :
a) un support d'outil monté de façon pivotante pour un outil supérieur, et
b) une table élévatrice (5) pour la réception d'un outil inférieur (7), de manière à ce que l'outil inférieur (7) puisse être déplacé en élévation au moyen d'un entraînement vertical (10), l'installation de soudage par vibration (1) présentant en outre :
c) au moins un entraînement horizontal permettant de déplacer l'outil inférieur (7) dans une direction horizontale, **caractérisée en ce que** l'installation de soudage par vibration comporte en outre
d) au moins un entraînement de pivotement (20, 22) permettant de faire en outre pivoter l'outil inférieur (7) hors d'un plan horizontal.

2. Installation de soudage par vibration (1) selon la revendication 1, dans laquelle la table élévatrice (5) comporte une plaque coulissante (30) à laquelle est attribué l'au moins un entraînement horizontal pour le déplacement horizontal de l'outil inférieur (7).

3. Installation de soudage par vibration (1) selon la revendication 2, dans laquelle la table élévatrice (5) présente en outre une plaque basculante (40), à laquelle est attribué l'au moins un entraînement de pivotement (20) pour le pivotement de l'outil inférieur (7) hors du plan horizontal.

4. Installation de soudage par vibration (1) selon l'une des revendications précédentes, présentant un premier et un deuxième entraînement horizontal.

5. Installation de soudage par vibration (1) selon la revendication 4, dans laquelle le premier entraînement horizontal permet de déplacer l'outil inférieur (7) dans une première direction horizontale et le deuxième entraînement horizontal permet de déplacer celui-ci dans une deuxième direction formant de préférence un angle droit avec la première direction horizontale.

6. Installation de soudage par vibration (1) selon l'une des revendications précédentes, comportant un premier (20) et un deuxième entraînement de pivotement (22).

7. Installation de soudage par vibration (1) selon la revendication 6, dans laquelle l'installation de soudage par vibration (1) présente en outre un troisième entraînement de pivotement.

8. Installation de soudage par vibration (1) selon la revendication 7, dans laquelle l'installation de soudage par vibration (1) comporte en outre un quatrième entraînement de pivotement.

9. Installation de soudage par vibration (1) selon l'une des revendications précédentes, dans laquelle au moins l'un parmi l'entraînement vertical (10), l'au moins un entraînement horizontal et l'au moins un entraînement de pivotement (20, 22) est sélectionné parmi le groupe des entraînements sensibles aux vibrations, en particulier des entraînements par chaîne et par courroie.

10. Installation de soudage par vibration (1) selon l'une des revendications précédentes, présentant en outre des moyens de commande permettant d'actionner l'entraînement vertical (10), l'au moins un entraînement horizontal et l'au moins un entraînement de pivotement (20, 22), de manière à pouvoir déplacer un outil inférieur (7) selon une courbe de commande (80).

11. Procédé de commande pour une installation de soudage par vibration, en particulier pour une installation de soudage par vibration (1) selon l'une des revendications 1 à 10, comportant les étapes suivantes :
a) actionnement d'un entraînement vertical (10) afin de déplacer une table élévatrice (5) dans une direction verticale par rapport au sol,
b) actionnement d'au moins un entraînement horizontal afin de déplacer l'outil inférieur (7) dans une direction horizontale par rapport au sol, **caractérisé en ce que** le procédé de commande comporte l'étape supplémentaire suivante :
c) actionnement d'au moins un entraînement de pivotement (20, 22) afin de faire pivoter l'outil inférieur (7) hors d'un plan horizontal.

12. Procédé de commande selon la revendication 11, dans lequel l'actionnement des différents entraînements (10, 20, 22) est effectué selon une courbe de commande (80).
